# EUROPÄISCHE PATENTSCHRIFT

(11) **EP 0 379 655 B1**
(45) Veröffentlichungstag und Bekanntmachung des Hinweises auf die Patenterteilung: **11.08.1993**
(21) Anmeldenummer: 89120464.6
(22) Anmeldetag: 06.11.1989
(51) Int. Cl.: F16L 37/08, F16L 37/12

(54) **Verbindungsvorrichtung**
Connection device
Dispositif de raccordement

(30) Priorität: 25.01.1989 DE 3902094; 24.02.1989 DE 3905722
(43) Veröffentlichungstag der Anmeldung: 01.08.1990
(73) Patentinhaber: Festo KG, D-73734 Esslingen (DE)
(72) Erfinder: Stoll, Kurt, Dipl.-Ing., D-7300 Esslingen (DE); Brenner, Hans-Walter, D-7000 Stuttgart 80 (DE); Wagner, Albrecht, D-7065 Winterbach (DE); Feyrer, Thomas, D-7300 Esslingen (DE)
(74) Vertreter: Reimold, Otto, Dr. Dipl.-Phys.

(56) Entgegenhaltungen:
- WO-A-85/05164
- DE-A- 2 426 948
- DE-B- 2 503 550
- DE-B- 2 807 508
- DE-C- 3 025 427
- DE-U- 7 734 678
- DE-U- 8 520 545
- FR-A- 2 398 251
- FR-A- 2 590 648

## Beschreibung

Die Erfindung betrifft eine Verbindungsvorrichtung zur Verbindung von zum Führen eines Strömungsmediums geeigneten leitungsförmigen Bauteilen wie Druckmittelschläuche oder Druckmittelleitungen miteinander oder mit anderen Bauelementen, die folgende Teile enthält:
(a) einen Haltekörper, der mindestens eine Anschlußöffnung zur Aufnahme des Anschlußendes eines anzuschließenden, lösbar einsteckbaren leitungsförmigen Bauteiles aufweist,
(b) eine zumindest teilweise in der Anschlußöffnung angeordnete, axial bewegliche Spannzange, die einen Tragring und mehrere bei eingestecktem Bauteil gesehen im Bereich des Anschlußendes entlang dessen Außenumfang verteilt angeordnete und federnd gegen diesen vorgespannte Spannelemente aufweist, die in einer wirksamen Stellung eine Spannstellung einnehmen, in der an ihnen vorgesehene Klemmabschnitte das Anschlußende am Außenumfang mit nach radial innen wirkender Klemmkraft beaufschlagen und halten,
(c) an den Spannelementen vorgesehene Abstützbereiche, die einer Abstützpartie am Haltekörper zugeordnet sind, wobei sowohl die Abstützpartie als auch die zugehörigen Abstützbereiche an den einander zugewandten Seiten jeweils eine sich in Einsteckrichtung und hierbei gleichzeitig nach radial außen erstreckende, innerhalb der Anschlußöffnung angeordnete Schrägfläche aufweisen, so daß die Spannzange zumindest im Bereich ihrer Spannelemente bei einer Bewegung entgegen der Einsteckrichtung infolge des Abgleitens der Abstützbereiche an der Abstützpartie zur Erhöhung der gegen das Anschlußende wirkenden Spannkraft nach radial innen gedrückt wird,
(d) ein am Haltekörper verschiebbar angeordnetes Löseelement, das beim in Einsteckrichtung aus einer Ruhestellung in eine wirksame Stellung erfolgenden Verschieben die Spannelemente in eine mit den Klemmabschnitten vom Außenumfang des eingesteckten Anschlußendes abgehobene oder das Anschlußende mit verringerter Kraft beaufschlagende Freigabestellung verbringt, so daß das Anschlußende aus der Anschlußöffnung entnehmbar ist.

Mit derartigen Verbindungsvorrichtungen werden vor allem in der Pneumatik druckmittelführende Druckmittelschläuche oder -leitungen o.dgl. untereinander verbunden oder an andere pneumatische Bauelemente wie Arbeitszylinder oder Ventile angeschlossen.

Eine Verbindungsvorrichtung der eingangs genannten Art ist in der FR-A-2,590,648 beschrieben. Deren Spannzange verfügt über einen weit im Innern der Anschlußöffnung angeordneten Tragring, an den sich entgegen der Einsteckrichtung nach außen ragende backenförmige Spannelemente anschließen, die das eingesteckte Anschlußende einer Druckmittelleitung umschließen. An dem dem Tragring entgegengesetzten Ende der Spannelemente sind schräge Abstützbereiche vorgesehen, die bei einer Zugbelastung des Anschlußendes an einer Abstützpartie des Halteteiles abgleiten, worauf Klemmabschnitte der Spannelemente verstärkt gegen den Umfang des Anschlußendes gedrückt werden. Zum Lösen der Verbindung wird die Spannzange mittels eines Löseelementes nach axial innen verschoben, so daß die Klemmabschnitte vom Umfang des Anschlußendes abgehoben werden.

Da die Spannelemente der FR-A-2,590,648 eine relativ große axiale Erstreckung aufweisen, läßt sich eine sichere Mitnahmeverbindung zwischen einem eingesteckten Anschlußende und den Klemmabschnitten nur durch eine sehr hohe radiale Vorspannung der Spannelemente gewährleisten. Dies hat aber zur Folge, daß ein Anschlußende, vor allem wenn es aus relativ weichem Kunststoffmaterial besteht, bereits beim Einstecken beschädigt werden kann, indem in seinen Außenumfang Nuten oder Rillen eingeritzt werden. Als Konsequenz werden sich, vor allem nach mehrmaliger Montage und Demontage des Anschlußendes, Undichtigkeiten in der Verbindung einstellen. Auch steht zu befürchten, daß die Spannzange beim Einstecken des Anschlußendes insgesamt nach axial innen gedrückt wird, so daß Quetschungen des nachgeordneten Dichtringes auftreten, was dessen Haltbarkeit beeinträchtigen kann.

Dieser Effekt ist auch zu beobachten, wenn über das Löseelement auf die Spannzange eingewirkt wird, da diese hierbei insgesamt nach axial innen verlagert wird. Auch bei dieser Verlagerung können im übrigen Probleme auftreten, da die Klemmabschnitte zugleich aus ihrer Spannstellung ausgehoben werden müssen, so daß stirnseitig eine mit dem Löseelement zusammenarbeitende Schrägfläche vorhanden ist, die ein Verkeilen zwischen Spannzange und Löseelement zur Folge haben kann. Es ist außerdem zu befürchten, daß bei hoher Belastung des Anschlußendes entgegen der Einsteckrichtung die Spannzange mit ihren Spannelementen aus der Anschlußöffnung herausgezogen wird, vor allem wenn das Anschlußende aus relativ weichem Kunststoffmaterial besteht. In diesem Falle werden die Spannelemente im Bereich ihres Klemmabschnittes durch Abgleiten an der halteteilseitigen Abstützpartie so weit nach radial innen verlagert, bis sie ungehindert durch den Querschnitt der Anschlußöffnung nach axial außen rutschen können. Nur durch komplizierte Gestaltgebung des Löseelementes läßt sich diesem Effekt einigermaßen entgegenwirken, doch führt dies naturgemäß zu höheren Herstellungskosten und einer aufwendigen Montage der Bestandteile der Verbindungsvorrichtung.

Die vorliegende Erfindung hat zum Ziel, eine Verbindungsvorrichtung der genannten Art zu schaffen, die bei einfachem und kostengünstigem Aufbau auch bei großen Toleranzen im Außendurchmesser zu verbindender leitungsförmiger Bauteile einen sicheren Halt derer gewährleistet und bei Bedarf ein schnelles Lösen der Verbindung gestattet.

Diese Aufgabe wird bei Verwirklichung der folgenden Merkmale gelöst:
(e) die federnden Spannelemente der Spannzange erstrecken sich ausgehend vom Tragring mit abgeknicktem oder abgebogenem Verlauf klauenförmig in Einsteckrichtung ins Innere der Anschlußöffnung, wobei sie jeweils zunächst schräg nach radial außen verlaufende und hierbei den jeweiligen Abstützbereich bildende Abschnitte und hieran über die Abknickung oder Biegung anschließend schräg nach radial innen ragende Klemmabschnitte aufweisen, und
(f) der Tragring der Spannzange ist der Einsteckseite der Anschlußöffnung zugeordnet und weist an der den Spannelementen entgegengesetzten Seite mindestens einen die Bewegung der Spannzange in Einsteckrichtung begrenzenden Bewegungsanschlag auf, der einen mit dem Haltekörper axial unbewegbar fest verbundenen Gegenanschlag auf der entgegen der Einsteckrichtung weisenden Seite hintergreift.

Somit liegt eine Verbindungsvorrichtung vor, die bei Bedarf eine augenblickliche Verbindung mit einem anzuschließenden leitungsförmigen Bauteil ermöglicht, ohne daß irgendwelche Vorrichtungsteile manuell zu betätigen wären. Beim Einstecken eines Anschlußendes werden die federnden Spannelemente automatisch etwas nach außen gedrückt, um dann unter Spannung am Außenumfang des hindurchgesteckten Anschlußendes anzuliegen. In dieser Spannstellung ist das Anschlußende gegen ein unbeabsichtigtes Herausziehen gesichert. Wenn im leitungsförmigen Bauteil und der Anschlußöffnung ein Betriebsdruck ansteht und/oder unbeabsichtigt äußere Zugkräfte am leitungsförmigen Bauteil angreifen, wird die auf das Anschlußende wirkende Haltekraft vorteilhafterweise zusätzlich erhöht, da die hierbei mit dem Anschlußende infolge des Andrückens an dieses nach außen ein Stück weit mitbewegten und eine Klemmbewegung ausführenden Spannelemente durch Zusammenwirken mit der Abstützpartie verstärkt gegen den Umfang des Anschlußendes gedrückt werden. Auch bei pulsierender Druckbelastung ist somit ein zuverlässiger Halt gewährleistet. Bei alledem ermöglichen es die federnden Spannelemente, daß Anschlußenden unterschiedlichster Außendurchmesser - z. B. bedingt durch Fertigungstoleranzen - in ein und derselben Verbindungsvorrichtung zuverlässig spannbar sind. Auch das Lösen der Anschlußverbindung zwischen dem Anschlußende und der Verbindungsvorrichtung geht problemlos vonstatten, es muß nur das Löseelement in Einsteckrichtung verschoben werden, wodurch die Spannelemente ihren Haltegriff in bezug auf das Anschlußende lösen, so daß selbiges aus der Anschlußöffnung herausgezogen werden kann.

Eine Verbindungsvorrichtung, bei der Spannelemente einer Spannzange nach axial innen in die Anschlußöffnung hineinragen, geht zwar aus der WO-A-85/05164 hervor. Um ein Durchstecken einer Leitung zu ermöglichen, sind die Spannelemente normalerweise jedoch sehr weit auseinandergespreizt, weshalb zur Gewährleistung einer entgegen der Einsteckrichtung wirkenden Mitnahmeverbindung ein zusätzlicher Reibschluß unter Vermittlung eines elastischen Ringes vorzusehen ist. Abgesehen vom erhöhten baulichen Aufwand können dabei schon nach geringem Verschleiß des elastischen Ringes Funktionsstörungen auftreten. Ein abgeknickter bzw. abgebogener klauenartiger Verlauf der Spannelemente ist nicht ersichtlich, weshalb unter anderem auch der hoher Zugbeanspruchung entgegengesetzte Widerstand nicht das erfindungsgemäße Maß erreichen kann. Ähnliches gilt auch im Hinblick auf die DE-C-30 25 427, bei der die Spannzange überdies axial unbewegbar in der Anschlußöffnung eingespannt ist, was eine Kombination mit dem Gegenstand der FR-A-2,590,648 bereits aus prinzipiellen Gründen unmöglich macht.

Vorteilhafte Weiterbildungen der Erfindung sind in den Unteransprüchen aufgeführt.

Nachfolgend soll die Erfindung anhand einiger Ausführungsbeispiele unter Bezugnahme auf die beigefügte Zeichnung näher erläutert werden. In dieser zeigen:
- Figuren 1 bis 3: verschiedene Bauformen der Verbindungsvorrichtung im Längsschnitt und in vergrößerter Darstellung,
- Figur 4: die bei den Verbindungsvorrichtungen gemäß Figuren 1 bis 3 verwendete Spannzange in perspektivischer Darstellung, und
- Figur 5: eine weitere Ausführungsform der Verbindungsvorrichtung.

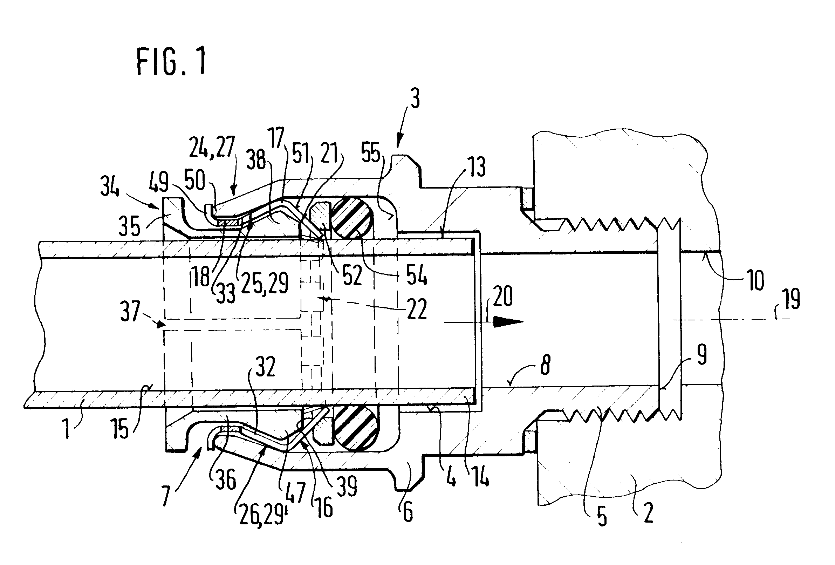

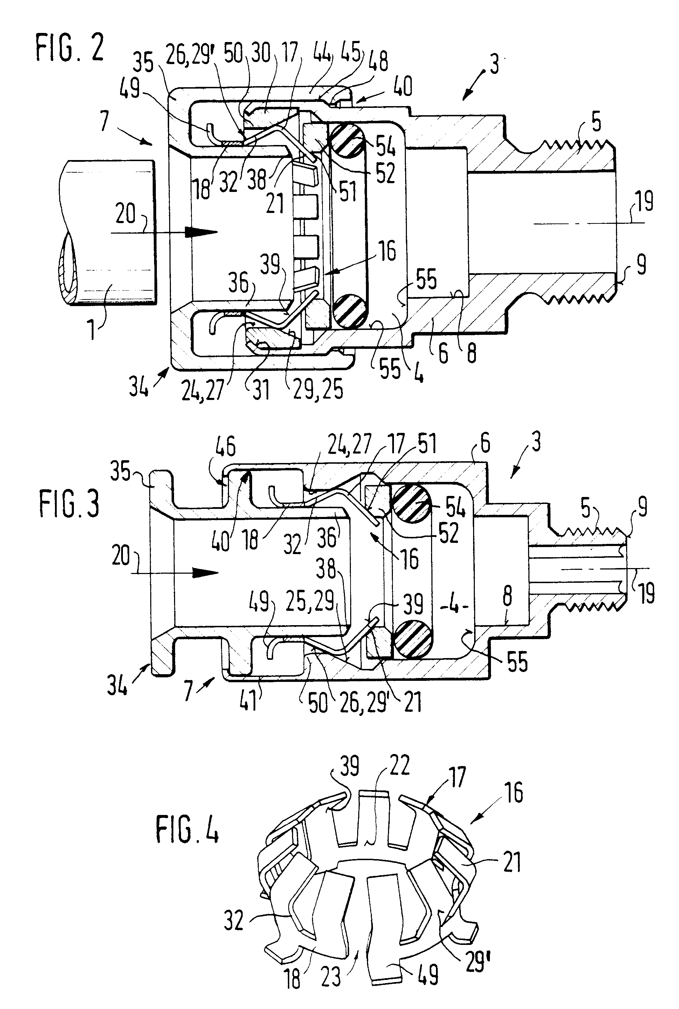

Die in der Zeichnung abgebildeten Verbindungsvorrichtungen sind so ausgelegt, daß durch sie ein lediglich in den Fig. 1 und 2 angedeutetes leitungsförmiges Bauteil 1 mit einem insbesondere nicht leitungsförmigen Bauelement 2 (in Fig. 1 ausschnittsweise angedeutet) verbunden werden kann. Bei dem leitungsförmigen Bauteil 1 handelt es sich um einen Druckmittelschlauch, eine Druckmittelleitung od.dgl., während das andere Bauelement 2 ein insbesondere pneumatisches Bauelement wie Arbeitszylinder, Ventil od.dgl. ist.

Die erfindungsgemäße Verbindungsvorrichtung 3 verfügt über eine Anschlußöffnung 4, in die das anzuschließende leitungsförmige Bauteil einsteckbar ist, außerdem enthält sie einen nach Art eines Schraubstutzens ausgebildeten Einschraubabschnitt 5, mit dem sie an dem Bauelement 2 durch Verschräuben lösbar festlegbar ist. Die Verbindungsvorrichtung 3 kann, entgegen den Abbildungen, mehrere Anschlußöffnungen 4 enthalten, an denen gleichzeitig mehrere Bauteile 1 festgelegt werden können. Dabei ist es möglich, auf einen Einschraubabschnitt oder einen vergleichbaren Verbindungsabschnitt zu verzichten, wenn die Verbindungsvorrichtung 3 lediglich zur Verbindung leitungsförmiger Bauteile untereinander verwendet werden soll. Abgesehen davon, kann ein evtl. vorhandener Verbindungsabschnitt den jeweiligen Anforderungen entsprechend ausgebildet sein, eine Beschränkung auf die in der Zeichnung angedeuteten Einschraubabschnitte 5 ist für die Erfindung nicht erforderlich. Es ist sogar möglich, den bei den Ausführungsbeispielen als Einschraubabschnitt 5 gestalteten Verbindungsabschnitt als Einsteck-oder Aufsteckpartie auszubilden oder den entsprechenden Bereich der Verbindungsvorrichtung 3 integral mit einem Bauelement 2 zu verbinden und an dieses insbesondere einstückig anzuformen.

Die Anschlußöffnung 4 ist bei der erfindungsgemäßen Verbindungsvorrichtung 3 in einem Haltekörper 6 ausgebildet und stellt den der axial ausgerichteten Einsteckseite 7 der Vorrichtung zugeordneten Endabschnitt eines den Haltekörper 6 koaxial durchziehenden Durchgangskanals 8 dar. Er mündet beim Ausführungsbeispiel an der dem Einschraubabschnitt 5 zugeordneten entgegengesetzten Montageseite 9 der Vorrichtung aus und ist bei an einem Bauelement 2 festgelegter Vorrichtung mit einem in diesem weitergeführten Bauelemente-Kanal 10 verbunden.

Zum Anschluß an die Verbindungsvorrichtung 3 wird das leitungsförmige Bauteil 1 mit seinem einen axialen Anschlußende 14 in die Anschlußöffnung 4 koaxial eingeführt, wodurch ein im leitungsförmigen Bauteil 1 ausgebildeter Längskanal 15 über den weiteren Abschnitt des Durchgangskanals 8 mit dem Bauelemente-Kanal 10 verbunden ist. Durch die Kanalverbindung kann nun ein unter einem Betriebsdruck stehendes Strömungsmedium insbesondere gasförmiger Art, und hierbei vorzugsweise Druckluft, hindurchströmen.

Das Anschlußende 14 läßt sich in der Anschlußöffnung 4 lösbar arretieren, zu welchem Zwecke die Verbindungsvorrichtung 3 eine Spannzange 16, 16' enthält (detaillierte Abbildung in den Fig. 4 und 6). Diese weist mehrere in der Anschlußöffnung 4 in Umfangsrichtung mit Abstand zueinander verteilte und bei eingestecktem Anschlußende 14 im Bereich dessen Außenumfanges 13 angeordnete federnde Spannelemente 17 auf. Selbige sind vorzugsweise in Umfangsrichtung mit Bezug zur Anschlußöffnung 4 miteinander verbunden, so daß die Spannzange 16,16' ein koaxial in der Anschlußöffnung 4 angeordnetes Ringgebilde darstellt, wobei die bei den Ausführungsformen verwirklichte Gestaltungsform insbesondere den Fig. 4 und 6 gut zu entnehmen ist.

Zur Verbindung der einzelnen Spannelemente 17 weist die Spannzange 16,16' zweckmäßigerweise einen Tragring 18 auf, der koaxial zur Anschlußöffnung 4 angeordnet ist und durch den ein eingestecktes Anschlußende 14 hindurchragt. An dem Tragring 18 sind die einzelnen Spannelemente in Umfangsrichtung beabstandet angeordnet, wobei sie klauenförmig im wesentlichen in Axialrichtung 19 und hierbei in Einsteckrichtung 20 an einer Tragringseite wegragen. Man könnte die Spannelemente 17 deshalb auch als Spannarme oder Spannsegmente bezeichnen.

Die Spannelemente 17 der Spannzange 16,16' sind federnd und zumindest die zum Fixieren eines Anschlußendes 14 unmittelbar mit diesem zusammenarbeitenden Klemmabschnitte 21 der Spannelemente 17 sind federnd nach radial innen vorgespannt, so daß der von ihnen umgebene Spannquerschnitt 22 bei nicht eingestecktem Anschlußende 14 geringer ist als dessen Außenquerschnitt. Zwar ist es möglich, die federnde Eigenschaft unter Vermittlung eines zwischen den Spannelementen 17 und dem Haltekörper 6 angeordneten federnden Zusatzelementes zu erzielen, es ist jedoch die in den Ausführungsbeispielen gezeigte Variante wesentlich vorteilhafter, in der die Spannelemente 17 selbstfedernd ausgebildet sind und zweckmäßigerweise aus federndem Material bestehen. Zweckmäßigerweise bestehen die Spannelemente 17 aus Metall und sind vorzugsweise einstückig an den Tragring 18 angeformt. Es ist aber auch möglich, den Tragring aus einem elastischen Verbundwerkstoff herzustellen, der die Spannelemente zusammenhält. Vorteilhaft ist es auf jeden Fall, wenn die gesamte Spannzange 16,16' federnd ist und insbesondere aus Material mit federelastischen Eigenschaften besteht.

Wenn ein Bauteil 1 mit seinem Anschlußende 14 in die Anschlußöffnung 4 eingeführt wird, dann drückt es gegen die Klemmabschnitte 21 der Spannelemente 17, wodurch diese unter Aufweitung des Spannquerschnittes 22 nach radial außen bewegt werden und zusammen mit den zugehörigen Spannelementen 17 eine Spannstellung einnehmen, in der sie den Außenumfang 13 des Anschlußendes 14 mit nach innen wirkender Klemmkraft beaufschlagen und halten.

Wegen der radialen Nachgiebigkeit der Spannelemente 17 vermag die Spannzange 16,16' große Außendurchmesser-Toleranzen seitens der einzusteckenden Anschlußenden 14 zu kompensieren, Schlauchtypen mit - in gewissem Rahmen - verschiedenen Außendurchmessern bzw. Außenquerschnitten lassen sich deshalb problemlos an ein und dieselbe Verbindungsvorrichtung 3 anschließen.

Beim Ausführungsbeispiel ist die ringförmige Spannzange 16,16' außerdem an einer Stelle ihres Umfanges mit einer Trennstelle 23 versehen, an der sie offen ist und über einen Bewegungsspalt verfügt, so daß das gesamte Ringgebilde federnd aufweitbar und/oder verengbar bzw. zusammendrückbar ist. Beim Ausführungsbeispiel befindet sich die Trennstelle 23 am Tragring 18 im Bereich zwischen zwei einander in Umfangsrichtung benachbarten Spannelementen 17. Die Trennstelle 23 erhöht die Elastizität der Spannzange 16,16' insbesondere in radialer Richtung um ein weiteres.

Die Spannzange 16,16' ist derart am Haltekörper 6 angeordnet, daß der Verbindungsbereich der Spannelemente 17 - hier: der Tragring 18 - der Einsteckseite 7 zugeordnet ist, von wo ausgehend die klauenförmigen Spannelemente 17 in Einsteckrichtung ins Innere der Anschlußöffnung 4 hineinragen. Aus einem noch zu erläuternden Grunde ist die Spannzange 16,16' in und entgegen der Einsteckrichtung 20 in Axialrichtung 19 bewegbar am Haltekörper 6 angeordnet. Eine Bewegung entgegen der Einsteckrichtung 20 soll nachfolgend als Klemmbewegung bezeichnet werden. Um aber zu verhindern, daß die Spannzange 16,16' versehentlich vom Haltekörper 6 getrennt wird, ist sie über eine Sicherungseinrichtung 27 in der Anschlußöffnung 4 unverlierbar gehaltert.

Beim Ausführungsbeispiel ist vorteilhaft, daß keine separate Sicherungseinrichtung 27 erforderlich ist, sondern diese gleichzeitig von einer zwischen der Spannzange 16,16' und dem Haltekörper 6 wirkenden Abstützeinrichtung 24 gebildet ist. Sie besteht aus einer am Haltekörper 6 in Axialrichtung 19 unbewegbar angeordneten Abstützpartie 25 und aus einem an der Spannzange angeordneten Abstützbereich 26, wobei die Ausgestaltung so getroffen ist, daß die Abstützeinrichtung 24 bei einer Klemmbewegung der Spannzange 16,16' zumindest deren Spannelemente 17, vorzugsweise aber die gesamte Spannzange, in Richtung zum eingesteckten Anschlußende 14 zusätzlich nach innen drückt. Eine solche Klemmbewegung kann bereits bei einer geringfügigen Bewegung des leitungsförmigen Bauteils 1 entgegen der Einsteckrichtung 20 ausgelöst werden, bei der die Spannzange 16,16' infolge der klemmenden Verbindung mit dem Anschlußende 14 mitbewegt wird. Die Mitbewegung erfolgt schlupffrei, wenn die Klemmabschnitte 21 formschlüssig in die Wandung des Anschlußendes 14 eingegriffen haben.

Auslöser für die Axialbewegung des leitungsförmigen Bauteils 1 kann eine außen an diesen angreifende Zugkraft und/oder der in der Kanalverbindung 15,8,10 herrschende Betriebsdruck sein, im letztgenannten Falle wird bei anstehendem Betriebsdruck automatisch eine Erhöhung der Haltekraft erreicht.

Es ist zweckmäßig, wenn sowohl die Abstützpartie 25 als auch der Abstützbereich 26 eine sich in Einsteckrichtung 20 und hierbei gleichzeitig radial nach außen erstreckende Schrägfläche 29,29' aufweisen, wie dies bei den Ausführungsbeispielen der Fall ist.

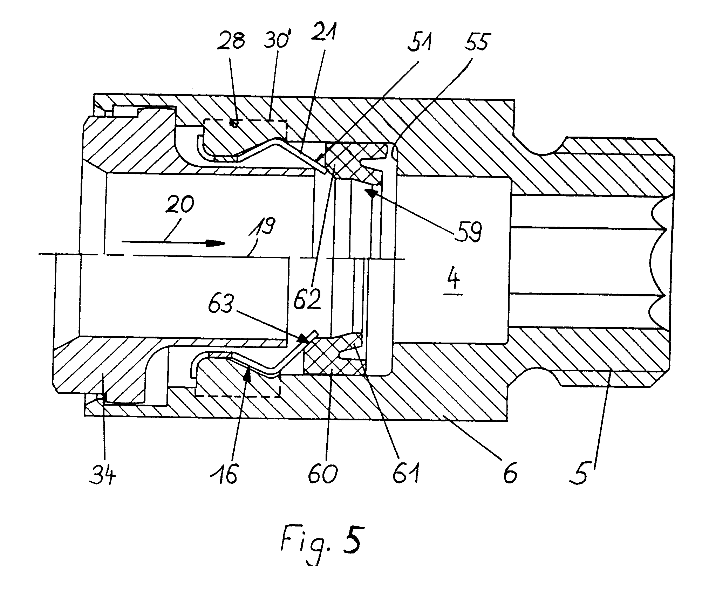

Die halteteilseitige Schrägfläche 29 ist bei den abgebildeten Ausführungsbeispielen am einsteckseitigen Mündungsbereich in der Anschlußöffnung 4 vorgesehen. Die Schrägfläche 29 hat die Gestalt der Mantelfläche eines Kegelstumpfes und erstreckt sich koaxial um die Spannzange 16,16'. Sie kann eben sein, wie dies bei den Ausführungsbeispielen gemäß Fig. 1 und 5 der Fall ist, kann aber auch eine mehr oder weniger starke Wölbung aufweisen, wie dies in den Fig. 2 und 3 realisiert ist. Während sie allerdings bei den Ausführungsbeispielen gemäß Fig. 1, 3 und 5 unmittelbar am Innenumfang der Anschlußöffnung 4 angeformt ist, d.h. durch entsprechende Gestaltung der Kontur der Anschlußöffnung 4 erhalten wird, ist sie beim Ausführungsbeispiel gemäß Fig. 2 an einen Lagerring 30 angeformt, der in der Anschlußöffnung 4 koaxial angeordnet ist. Vorzugsweise ist er um die Längsachse 19 drehbar gelagert. Beim Ausführungsbeispiel sitzt der Lagerring in einer ringförmigen Umfangsvertiefung 31 der Anschlußöffnung 4 ein und wird an beiden axialen Seiten in Axialrichtung unbewegbar, jedoch frei drehbar gehalten.

Der vorzugsweise als Einlegeteil ausgebildete Lagerring 30 gewährleistet, daß bei einer Verdrehung des leitungsförmigen Bauteils 1 gegenüber der Verbindungsvorrichtung 3 die Spannzange 16,16' mitdrehbar ist, so daß zwischen ihr und dem Anschlußende 14 keine evtl. eine Beschädigung an der Wand des Bauteils 1 auslösende Relativbewegung auftritt. Der Lagerring 30 dient also hier der Drehlagerung für die Spannzange 16,16' und das von dieser gehaltene Anschlußende 14.

Entsprechend dem gewünschten Bewegungsverhalten der Spannelemente 17 beim Abgleiten an der Schrägfläche 29 kann diese eine andere Formgebung aufweisen. Ein evtl. vorhandener Lagerring 30 kann zu diesem Zwecke einen jeweils entsprechenden Querschnitt aufweisen, z.B. einen runden oder einen quadratischen Querschnitt.

Während die Schrägfläche 29 bei allen Ausführungsbeispielen eine in sich geschlossene Ringfläche darstellt, besteht sie bei einem nicht näher dargestellten Ausführungsbeispiel aus einer Mehrzahl einzelner Schrägflächenabschnitte, wobei zweckmäßigerweise jeweils einer dieser Abschnitte einem der Spannzangen-Elemente 17 zugeordnet ist.

Die spannzangenseitige Schrägfläche 29' ist bei den Ausführungsbeispielen unmittelbar an die Spannzange und insbesondere an die Spannelemente 17 angeformt. Zu diesem Zweck sind die Spannelemente 17 in ihrem sich in Einsteckrichtung 20 an den Tragring 18 anschließenden Bereich entsprechend dem Verlauf der Schräge nach radial außen gespreizt, und der Abstützbereich 26 bzw. die Schrägfläche 29' ist vom nach außen weisenden Oberflächenabschnitt dieses schrägen Spannelement-Abschnittes 32 gebildet.

Es ist nicht notwendigerweise erforderlich, daß die beiden Schrägflächen 29,29' flächig bzw. plan aneinander anliegen. Es stellt sich sogar ein besseres Bewegungsverhalten der Spannelemente 17 ein, wenn die mit Bezug zur Längsachse 19 gemessene Steigung der spannzangenseitigen Schrägfläche 29' etwas größer ist als diejenige der halteteilseitigen Schrägfläche 29. Bei weitestmöglich in die Anschlußöffnung 4 eingesteckter Spannzange 16,16' stellt sich dadurch zwischen den beiden einander gegenüberliegenden Schrägflächen 29,29' an dem Einsteckseite 7 zugewandten Bereich ein Zwischenraum 33 ein, so daß die Anlagebereiche verringert sind und die Klemmbewegung leichter vonstatten geht.

In Fig. 1 ist die Spannzange 16,16' im wesentlichen in ihrer weitestmöglich in die Anschlußöffnung 4 eingeschobenen Stellung abgebildet. Die Fig. 2 und 3 verdeutlichen die Spannzangenstellung nach erfolgter Klemmbewegung (das eingesteckte Anschlußende ist der Übersichtlichkeit wegen nicht dargestellt), im Rahmen derer der Abstützbereich 26 an der Abstützpartie 25 abgleitet. Die Schrägflächen beim Ausführungsbeispiel sind daher Gleitflächen.

Da die Spannzange 16,16' bei den Ausführungsbeispielen eine Trennstelle 23 aufweist, wird bei der Klemmbewegung automatisch der vom Tragring 18 umschlossene Spannquerschnitt verringert.

Da sich der Querschnitt der Anschlußöffnung 4 im Bereich der Abstützpartie 25 verringert und die Spannelemente 17 in diesem Bereich nach außen gespreizt sind (32), ist die Spannzange 16,16' unverlierbar am Haltekörper 6 fixiert.

Es ist vorteilhaft, wenn die Spannzange 16,16' unter radialer Vorspannung in der Anschlußöffnung 4 einsitzt. Auf jeden Fall ist in diesem Zusammenhang die Trennstelle 23 vorteilhaft, da sie ein elastisches Zusammendrücken der Spannzange zum Einsetzen in die Anschlußöffnung 4 ermöglicht.

Es ist auch möglich, die Spannzange so auszugestalten, daß sie im in der Anschlußöffnung einsitzenden Zustand eine Neutralstellung einnimmt, von der ausgehend sie elastisch aufweitbar oder verengbar ist.

Um ein in der Anschlußöffnung 4 fixiertes Anschlußende 14 wieder entnehmen zu können, ist am Haltekörper 6 einer jeweiligen Vorrichtung ein als Schiebeteil ausgebildetes Löseelement 34 verschiebbar angeordnet. Es enthält eine außerhalb der Anschlußöffnung 4 angeordnete Handhabungspartie 35, an der es sich zur Ausführung des Verschiebevorganges ergreifen läßt, sowie mindestens eine in die Anschlußöffnung 4 axial hineinragende Betätigungspartie 36, die zur Lösung des Klemmgriffes zwischen Spannzange und Anschlußende mit den Spannelementen zusammenarbeitet. Wenn das Löseelement ausgehend von seiner normalerweise eingenommenen Ruhestellung in Einsteckrichtung 20 in seine wirksame Stellung verschoben wird, bewirkt es, daß die Spannelemente 17 zumindest im Bereich ihrer Klemmabschnitte 21 in eine vom Außenumfang 13 des eingesteckten Anschlußendes 14 abgehobene oder das Anschlußende mit verringerter Kraft beaufschlagende Freigabestellung verbracht werden, in der das Anschlußende 14 aus der Anschlußöffnung 4 entnommen werden kann.

Bei den abgebildeten Ausführungsbeispielen werden die Klemmabschnitte 21 beim Bewegen des Löseelementes 34 in seine wirksame Stellung nach radial außen aufgespreizt. Wie man auch der Fig. 4 entnehmen kann, schließen sich die Klemmabschnitte 21 vorzugsweise an die schrägen Spannelement-Abschnitte 32 an, wobei sie ausgehend von deren dem Tragring 18 entgegengesetzten Enden schräg nach radial innen und gleichzeitig in Einsteckrichtung 20 ragen. Im Übergangsbereich zwischen den schrägen Spannelement-Abschnitten 32 und den Klemmabschnitten 21 verfügt jedes Spannelement 17 daher über einen Knick oder eine Biegung, das entgegengesetzte freie Ende der Klemmabschnitte 21 beaufschlagt in der Spannstellung den Umfang des Anschlußendes 14.

Bei den Ausführungsbeispielen gemäß Fig. 1 bis 3 ist das Löseelement 34 als gegenüber der Spannzange 16 unabhängig bewegbares separates Bauteil ausgebildet, und es ist zweckmäßigerweise hülsenförmig ausgebildet, so daß man es als Schiebehülse bezeichnen kann, die mit ihrer Betätigungspartie 36 koaxial innerhalb der Anschlußöffnung 4 und der Spannzange 16 axial verschiebbar angeordnet ist. Das eingesteckte Anschlußende 14 ist also durch das Löseelement 36 hindurchgesteckt, das an einer Stelle seines Umfanges zweckmäßigerweise eine durchgehende, sich axial und radial erstreckende Unterbrechung z.B. in Form eines Schlitzes aufweist. Letzteres ist vorteilhaft, um den Innendurchmesser der Schiebehülse in Anpassung an unterschiedliche Außendurchmesser einzusteckender Bauteile veränderbar zu halten. Außerdem gewährleistet die schlitzförmige Unterbrechung 37, daß die am Außenumfang der Betätigungspartie 36 angeordnete Spannzange 16 beim Ausführen der Klemmbewegung nicht an einer radialen Einschnürbewegung gehindert ist. Vielmehr wird die Einschnürbewegung auf die Schiebehülse übertragen, die sich demzufolge ebenfalls verengt und mit ihrem Innenumfang einen zusätzlichen Klemmgriff gegenüber dem Anschlußende 14 ausüben kann.

Die mithin hülsenförmige Betätigungspartie 36 des Löseelements 34 ist mit ihrem in Einsteckrichtung weisenden Endbereich 38 den nach innen gewandten Spannseiten 39 der Klemmabschnitte 21 zugewandt und zweckmäßigerweise benachbart. Wird das Löseelement 34 in Einsteckrichtung 20 verschoben, dann drückt der Endbereich 38 von innen her gegen die schräge Spannseite 39 und drückt oder biegt die Spannelemente in diesem Bereich nach außen in Richtung vom Umfang des eingesteckten Anschlußendes weg in die Freigabestellung. Wird der Verschiebedruck auf das Löseelement 34 verringert, so gelangt es auf Grund der federnden Eigenschaft der Spannelemente 17 automatisch in die Ruhestellung zurück. Um beim Verbringen in die wirksame Stellung eine bessere Kraftübertragung zu gewährleisten, kann der Endbereich 38 in Anpassung an die schrägen Klemmabschnitte 21 ebenfalls abgeschrägt sein.

Bei den Ausführungsbeispielen gemäß Fig. 2 und 3 ist das als Schiebeteil ausgebildete Löseelement 34 über eine Führungseinrichtung 40 gegenüber dem Haltekörper 6 in seiner Verschiebebewegung geführt. Beim Ausführungsbeispiel gemäß Fig. 2 handelt es sich um eine Außenführung, hier ist die Handhabungspartie 35 mit einem hohlzylindrischen Führungsteil 44 versehen, das die Betätigungspartie 36 mit radialem Spiel koaxial umgibt und den Haltekörper 6 im Bereich der Einsteckseite 7 am Außenumfang umgreift. Die nach radial innen weisende Fläche des übergreifenden Abschnittes steht hierbei in Gleitkontakt mit einem zugewandten Außenflächenabschnitt 45 des Haltekörpers 6.

Demgegenüber ist beim Ausführungsbeispiel gemäß Fig. 3 eine Innenführung vorgesehen, zu welchem Zweck der aus der Anschlußöffnung 4 herausragende Bereich des Löseelements 34 am Außenumfang einen Ringvorsprung 46 besitzt, der an der Innenfläche eines einsteckseitig an den Haltekörper 6 angeformten hohlzylindrischen Fortsatzes 41 verschiebbar geführt ist.

Wie man den Fig. 2 und 3 gut entnehmen kann, umschließt der Tragring 18 die Betätigungspartie 36 zweckmäßigerweise mit Gleitspiel. Außerdem ist das Löseelement gemäß Fig. 2 und 3 zweckmäßigerweise ohne Unterbrechung 37 ausgebildet.

Es ist zweckmäßig, wenn das Löseelement 34 unverlierbar an der Verbindungsvorrichtung 3 gehaltert ist. Zu diesem Zweck ist gemäß Fig. 1 am Außenumfang der Betätigungspartie 36 ein höckerförmiger Umfangswulst 47 angeformt, der in den von den beiden schrägen Abschnitten 32,21 begrenzten Spannzangenbereich eintaucht. Beim Ausführungsbeispiel gemäß Fig. 2 ist das Führungsteil 44 mit einem Radialvorsprung 48 versehen,der zur Wegbegrenzung auf eine Stufe am Haltekörper 6 auflaufen kann. Beim Ausführungsbeispiel gemäß Fig. 3 ist der hohlzylindrische Fortsatz einsteckseitig umgebogen und bildet einen mit dem Ringvorsprung 46 zusammenwirkenden Bewegungsanschlag.

Zweckmäßigerweise ist der der Spannzange 16 in Einsteckrichtung 20 zur Verfügung stehende Bewegungsweg beschränkt, wozu am aus der Anschlußöffnung 4 herausragenden Spannzangenbereich mindestens ein Bewegungsanschlag 49 vorgesehen ist, der auf einen haltekörperseitig insbesondere am einsteckseitigen Mündungsbereich der Anschlußöffnung 4 angeordneten Gegenanschlag 50 auflaufen kann. Dieser Bewegungsanschlag 49 dient hauptsächlich zum Festhalten der Spannzange 16, wenn deren Spannelemente 17 durch das Löseelement 34 beaufschlagt werden.

Die hülsenförmige Betätigungspartie 36 des als Schiebehülse ausgebildeten Löseelements 34 kann der Stabilisierung des hindurchgeführten Bauteils 1 dienen.

Vorzugsweise, und wie dies bei den Ausführungsbeispielen gemäß Fig. 1 bis 3 der Fall ist, ist den Spannelementen 17 in der Anschlußöffnung 4 an der vom eingesteckten Anschlußende 14 und der Spannseite 39 abgewandten Außenseite 51 ein in Axialrichtung bewegbares Stützelement 52 zugeordnet, das als koaxial in der Anschlußöffnung einsitzender Stützring ausgebildet ist. Es dient zur Erhöhung der auf das Anschlußende 14 einwirkenden Haltekräfte bei anstehendem Betriebsdruck, der das Stützelement entgegen der Einsteckrichtung 20 gegen die Spannelemente 17 und insbesondere deren Klemmabschnitte 21 preßt, so daß diese zusätzlich nach innen gedrückt oder gebogen werden. Das ringförmige Stützelement wird von einem Abschnitt der Anschlußöffnung 4 vorzugsweise in Axialrichtung verschiebbar geführt, und der Kontaktbereich zum Spannelement 17 kann mit einer Schräge versehen sein, so daß eine flächige Anlage an der Außenseite 51 gewährleistet ist und diese Außenseite 51 beim Verschieben des Stützelements 52 an dessen Schräge abgleiten kann.

Im übrigen wird durch das betriebsdruckbelastet an den Spannelementen 17 anliegende Stützelement 52 die Betätigungskraft zum Verbringen des Löseelements 34 in die wirksame Stellung erhöht, was der Betriebssicherheit zugute kommt.

Zur Abdichtung der Anschlußverbindung zwischen dem leitungsförmigen Bauteil 1 und der Verbindungsvorrichtung 3 ist ein Dichtring 54 vorgesehen, der in der Anschlußöffnung 4 einsitzt und das eingesteckte Anschlußende 14 koaxial umschließt. Er befindet sich zweckmäßigerweise axial im Bereich zwischen den Spannelementen 17 bzw. eines evtl. vorhandenen Stützelementes 52 und einer axial mit Abstand im Innern der Anschlußöffnung 4 gegenüberliegenden Ringstufe 55. Das Stützelement verhindert einen unmittelbaren Kontakt zwischen Dichtring 54 und der Spannzange 16, so daß Beschädigungen ausgeschlossen sind. Außerdem dient der Dichtring 54 als Zwischenglied, das den Betriebsdruck auf das Stützelement 52 überträgt, ohne daß Druckmedium nach außen gelangen kann. Die Ringstufe 55 ist nützlich, um den Dichtring 54 beim Einschieben eines Anschlußendes 14 axial zu fixieren. Außerdem kann sie beim Ausführungsbeispiel gemäß Fig. 5 als Axiallager für den Dichtring 54 dienen, der die Spannzange 16' u.U. axialseitig elastisch beaufschlagt, um sie in die Ruhestellung vorzuspannen. Das Stützelement bildet hier praktisch einen Verstärkungsring.

Bei der bei der erfindungsgemäßen Verbindungsvorrichtung verwendeten Spannzange ist von Vorteil, daß ihre Elastizität insbesondere auch im Tragring 18 liegen kann, der z. B. auch als Verbindungssteg bezeichenbar ist. Es ist hierbei zweckmäßig, den Innenquerschnitt bzw. -umfang der Spannzange in Bezug zum Außenquerschnitt bzw. -umfang des Anschlußendes 14 dergestalt auszubilden, daß die Spannzange bei eingestecktem Bauteil 1 unter radialer Vorspannung dieses umschließt.

In Folge der elastischen Aufweitbarkeit der Spannzange - wenn sie an einer Stelle ihres Umganges offen ist - kann sich ihr Innenumfang entsprechend dem jeweiligen Außendurchmesser des eingesteckten Anschlußendes 14 vergrößern und aufweiten. Die Spannzange ist folglich hinsichtlich ihres Innenumfanges sehr anpassungsfähig, Toleranzen im Außenumfang des Anschlußendes 14 werden automatisch ausgeglichen.

Die erfindungsgemäße Verbindungsvorrichtung ist sehr vielseitig verwendbar. Zusätzlich zu den bereits beschriebenen Ausführungs- und Verwendungsformen ist es vor allem auch möglich, die Vorrichtung in Art einer "Patrone" an einem jeweiligen Bauelement 2 festzulegen. In diesem Falle wird sie mit ihrem(beim Ausführungsbeispiel als Einschraubabschnitt ausgebildeten) Verbindungsabschnitt in das jeweilige Bauteil, z. B. einen Pneumatikzylinder, ein Ventil usw., eingepreßt, eingeklebt oder eingebördelt, wobei am entsprechenden Bauelement ein entsprechendes Verbindungs-Gegenstück, z. B. in Form einer Ausnehmung od. dgl. vorhanden ist. In diesen Fällen ist die Verbindungsvorrichtung mit dem mit ihm ausgestatteten Bauelement insbesondere unlösbar verbunden. Diese "Patronenausführung" hat vor allem montagetechnische Vorzüge.

Abschließend sei noch kurz auf das Ausführungsbeispiel gemäß Fig. 5 eingegangen, das grundsätzlich in etwa demjenigen aus Fig. 3 entspricht. Demzufolge sind entsprechende Bauteile mit identischen Bezugszeichen versehen worden. Unterschiedlich ist allerdings die Ausgestaltung des Dichtringes und des Stützelementes, in-dem beide Bauteile hier einstückig miteinander ausgebildet und zu einem einzigen integralen Stütz- und Dichtelement 59 zusammengefaßt sind. Dieses Stütz- und Dichtelement 59 besteht zweckmäßigerweise aus dem Material, aus dem üblicherweise Dichtelemente hergestellt werden, vorzugsweise aus Material mit gummielastischen Eigenschaften. Beim Ausführungsbeispiel enthält das Element 59 eine ringförmige äußere Haltepartie 60, mit der es am Innenumfang der Anschlußöffnung 4 geführt in Axialrichtung 19 hin- und herbewegbar ist. An die Haltepartie 60 ist eine nach innen vorspringende ringförmige Dichtlippe 61 angeformt, die ein eingestecktes Anschlußende 14 dichtend umschließt. Sie ist in Radialrichtung vorzugsweise elastisch nachgiebig. An dem der schrägen Außenseite 51 der Klemmabschnitte 21 gegenüberliegenden Bereich 62 ist das Element 59 mit einer insbesondere umlaufenden Schräge 63 versehen, wie sie vorzugsweise auch das bei dem anderen Ausführungsbeispielen vorgesehene separate Stützelement 52 aufweist. Die Neigung dieser Schräge entspricht in etwa derjenigen der schrägen Außenseite 51, und wenn das Stütz- und Dichtelement 59, z. B. durch Beaufschlagung durch den sich in der Anschlußöffnung 4 einstellenden Druck, entgegen der Einsteckrichtung 20 verschoben wird, kann die Schräge 63 außen an den Klemmabschnitten 21 abgleiten, welche demzufolge zusätzlich nach radial innen gedrückt werden.

In der in Fig. 5 oberhalb der Längsachse 19 abgebildeten Stellung ist das Stütz- und Dichtelement 59 der Ringstufe 55 angenähert und weiter von der Spannzange 16 entfernt, wobei die Schräge 63 jedoch vorzugsweise bereits in Kontakt mit den Klemmabschnitten 21 steht. In den unteren Figurenhälfte der Fig. 5 ist eine Arbeitsstellung des Stütz- und Dichtelements 59 angedeutet, bei der es entgegen der Einsteckrichtung 20 verschoben ist und die Klemmabschnitte 21 nach innen drückt bzw. umbiegt. Zweckmäßigerweise wird das Stütz- und Dichtelement 59 durch in Einsteckrichtung 20 erfolgendes Betätigen des Löseelements 34 aus seiner Arbeitsstellung in die in der oberen Figurenhälfte abgebildete Ausgangsstellung zurückbewegt, wobei die unmittelbare Einleitung der Rückstellkraft insbesondere durch die zwischengeschalteten Klemmabschnitte erfolgt.

Es ist von Vorteil, wenn das Dichtelement und insbesondere das Stütz- und Dichtelement 59 als sogenannter V-Ring ausgebildet ist, wie er in der Zeichnung dargestellt ist. Der eine V-Schenkel wird hier von der Haltepartie 60 und der andere V-Schenkel von der Dichtlippe 61 gebildet, während sich die Schräge 63 im Berührbereich der beiden V-Schenkel befindet.

Es versteht sich, daß die Erfindung auch bei unverdrehbarem separaten Lagerteil 30 funktioniert. Es hat jedenfalls den Vorteil einer einfachen Montage, wenn es z.B. als Schnappteil ausgebildet ist und im Rahmen einer Schnapp- oder Rastverbindung in einer entsprechenden Vertiefung im Halteteil 6 festlegbar ist. Bei ringförmiger Ausgestaltung ist es zweckmäßigerweise geschlitzt, um die für das Einrasten eventuell notwendige Bewegbarkeit zu gewährleisten. Beispielhaft ist in Fig. 5 gestrichelt ein als Schnapphülse ausgebildeter Lagerring 30' angedeutet, der in einer Umfangsvertiefung 28 der Anschlußöffnung 4 eingerastet ist.

## Patentansprüche

1. Verbindungsvorrichtung zur Verbindung von zum Führen eines Strömungsmediums geeigneten leitungsförmigen Bauteilen (1) wie Druckmittelschläuche oder Druckmittelleitungen miteinander oder mit anderen Bauelementen, die folgende Teile enthält:
(a) einen Haltekörper (6), der mindestens eine Anschlußöffnung (4) zur Aufnahme des Anschlußendes (14) eines anzuschließenden, lösbar einsteckbaren leitungsförmigen Bauteiles aufweist,
(b) eine zumindest teilweise in der Anschlußöffnung (14) angeordnete, axial bewegliche Spannzange (16), die einen Tragring (18) und mehrere bei eingestecktern Bauteil (1) gesehen im Bereich des Anschlußendes (14) entlang dessen Außenumfang verteilt angeordnete und federnd gegen diesen vorgespannte Spannelemente (17) aufweist, die in einer wirksamen Stellung eine Spannstellung einnehmen, in der an ihnen vorgesehene Klemmabschnitte (21) das Anschlußende (14) am Außenumfang (13) mit nach radial innen wirkender Klemmkraft beaufschlagen und halten,
(c) an den Spannelementen (17) vorgesehene Abstützbereiche (26), die einer Abstützpartie (25) am Haltekörper (6) zugeordnet sind, wobei sowohl die Abstützpartie (25) als auch die zugehörigen Abstützbereiche (26) an den einander zugewandten Seiten jeweils eine sich in Einsteckrichtung und hierbei gleichzeitig nach radial außen erstreckende, innerhalb der Anschlußöffnung (4) angeordnete Schrägfläche (29, 29') aufweisen, so daß die Spannzange (16) zumindest im Bereich ihrer Spannelemente (17) bei einer Bewegung entgegen der Einsteckrichtung (14) infolge des Abgleitens der Abstützbereiche (26) an der Abstützpartie (25) zur Erhöhung der gegen das Anschlußende (14) wirkenden Spannkraft nach radial innen gedrückt wird,
(d) ein am Haltekörper (6) verschiebbar angeordnetes Löseelement (34), das beim in Einsteckrichtung (14) aus einer Ruhestellung in eine wirksame Stellung erfolgenden Verschieben die Spannelemente (17) in eine mit den Klemmabschnitten (21) vom Außenumfang (13) des eingesteckten Anschlußendes (14) abgehobene oder das Anschlußende (14) mit verringerter Kraft beaufschlagende Freigabestellung verbringt, so daß das Anschlußende (14) aus der Anschlußöffnung (4) entnehmbar ist,
gekennzeichnet durch folgende Merkmale:
(e) die federnden Spannelemente (17) der Spannzange (16) erstrecken sich ausgehend vom Tragring (18) mit abgeknicktem oder abgebogenem Verlauf klauenförmig in Einsteckrichtung (14) ins Innere der Anschlußöffnung (4), wobei sie jeweils zunächst schräg nach radial außen verlaufende und hierbei den jeweiligen Abstützbereich (26) bildende Abschnitte (32) und hieran über die Abknickung oder Biegung anschließend schräg nach radial innen ragende Klemmabschnitte (21) aufweisen, und
(f) der Tragring (18) der Spannzange (16) ist der Einsteckseite (7) der Anschlußöffnung (4) zugeordnet und weist an der den Spannelementen (17) entgegengesetzten Seite mindestens einen die Bewegung der Spannzange (16) in Einsteckrichtung (14) begrenzenden Bewegungsanschlag (49) auf, der einen mit dem Haltekörper (6) axial unbewegbar fest verbundenen Gegenanschlag (15) auf der entgegen der Einsteckrichtung (20) weisenden Seite hintergreift.

2. Verbindungsvorrichtung nach Anspruch 1, dadurch gekennzeichnet, daß die Spannzange (16, 16') ein unter radialer Vorspannung im wesentlichen koaxial in der Anschlußöffnung (4) angeordnetes Ringgebilde darstellt.

3. Verbindungsvorrichtung nach Anspruch 1 oder 2, dadurch gekennzeichnet, daß der Tragring (18) an einer Stelle seines Umfanges eine Trennstelle (23) aufweist, so daß die Spannzange (16) ein federndes Aufweiten und/oder Verengen ermöglichend an einer Stelle ihres Umfanges offen ist.

4. Verbindungsvorrichtung nach einem der Ansprüche 1 bis 3, dadurch gekennzeichnet, daß das Löseelement (34) zu seiner Betätigung eine außerhalb der Anschlußöffnung (4) angeordnete Handhabungspartie (35) und daran anschließend eine koaxial in die Anschlußöffnung (4) hineinragende, insbesondere hülsenförmige Betätigungspartie (36) besitzt, wobei die Betätigungspartie (36) zugleich durch den Tragring (18) hindurch in die Spannzange (16) hineinragt und mit ihrem inneren Endbereich (38) der Innenseite der Klemmabschnitte (21) gegenüberliegt, um letztere bei in Einsteckrichtung (14) erfolgendem Verschieben des Löseelementes (34) in die Freigabestellung zu verbringen.

5. Verbindungsvorrichtung nach Anspruch 3 oder 4, dadurch gekennzeichnet, daß das Löseelement (34) eine an einer Stelle ihres Umfanges unterbrochene und insbesondere geschlitzte Schiebehülse ist.

6. Verbindungsvorrichtung nach einem der Ansprüche 1 bis 5, dadurch gekennzeichnet, daß zwischen dem Löseelement (34) und dem Haltekörper (6) eine Führungseinrichtung (40) für die Verschiebeführung des Löseelementes (34) vorgesehen ist.

7. Verbindungsvorrichtung nach einem der Ansprüche 1 bis 6, dadurch gekennzeichnet, daß die Abstützpartie (25) an einem gegenüber dem Haltekörper (6) separat ausgebildeten und in die Anschlußöffnung (4) zum Beispiel im Rahmen einer Schnapp- oder Rastverbindung eingesetzten Bauteil (30') vorgesehen ist.

8. Verbindungsvorrichtung nach einem der Ansprüche 1 bis 7, dadurch gekennzeichnet, daß die Abstützpartie (25) in Umfangsrichtung der Anschlußöffnung (4) drehbar am Haltekörper (6) angeordnet ist und sich beispielsweise an einem am Haltekörper drehbar gelagerten, koaxial zur Anschlußöffnung (4) angeordneten Lagerring (30) befindet.

9. Verbindungsvorrichtung nach einem der Ansprüche 1 bis 8, dadurch gekennzeichnet, daß den Spannelementen (17) der Spannzange (16) in Einsteckrichtung (20) mit Abstand eine am Haltekörper (6) fest angeordnete Stufe (55) der Anschlußöffnung (4) gegenüberliegt und sich im Bereich zwischen der Außenseite (51) der Klemmabschnitte (21) und dieser Stufe (55) ein insbesondere als Stützring ausgebildetes Stützelement (52) befindet, das axial bewegbar bei Druckbeaufschlagung der Anschlußöffnung (4) gegen die Außenseite (51) der Klemmabschnitte (21) drückbar ist.

10. Verbindungsvorrichtung nach Anspruch 9, dadurch gekennzeichnet, daß in der Anschlußöffnung (4) ein das eingesteckte Anschlußende (14) koaxial umschließender und sich axial zwischen den freien Endbereichen der Spannelemente (17) und einer Stufe (55) der Anschlußöffnung (4) befindender Dichtring (54) angeordnet ist.

11. Verbindungsvorrichtung nach Anspruch 10, dadurch gekennzeichnet, daß sich das Stützelement zwischen den Spannelementen (17) und dem Dichtring (54) befindet und als Anlagekörper für den Dichtring (54) dienen kann.

12. Verbindungsvorrichtung nach Anspruch 10, dadurch gekennzeichnet, daß das Stützelement (52) einstückig mit dem Dichtring (54) ausgebildet und vorzugsweise von diesem gebildet ist, derart, daß die Stützfunktion und die Dichtfunktion von einem einzigen Sütz- und Dichtelement (59) ausgeübt wird.

13. Verbindungsvorrichtung nach Anspruch 12, dadurch gekennzeichnet, daß das Stütz- und Dichtelement (59) eine ringförmige äußere Haltepartie (60) besitzt, mit der es am Innenumfang der Anschlußöffnung (4) geführt in Axialrichtung (19) hin und her bewegbar ist, und radial innen eine an die Haltepartie (60) einstückig angeformte Dichtlippe (61) aufweist, die ein eingestecktes Anschlußende (14) dichtend umschließt.

## Claims

1. Connecting device for the connection of pipe-shaped components (1) suitable for the guidance of a flow medium, such as pressure medium hoses or pressure medium lines, with one another or with other components, containing the following parts:
(a) a retaining body (6), with at least one connection port (4) to accommodate the connection end (14) of a releasably-insertable pipe-shaped component which is to be connected,
(b) an axially movable collet (16), at least partly located in the connection port (14), with a support ring (18) and several clamping elements (17) which, seen with the component (1) inserted, are distributed sprung and prestressed along its outer periphery in the area of the connection end (14), and assume a clamping position, in an effective position in which clamping sections (21) provided on them act upon and hold the connection end at its outer periphery (13) with clamping force acting radially inwards,
(c) support areas (26) provided on the clamping elements (17), to which are assigned a support section (25) on the retaining body (6), with both the support section (25) and also the associated support areas (26) having on each of the sides facing one another an inclined surface (29, 29') located within the connection port (4), extending in the direction of insertion and at the same time radially outwards, so that the collet (16) is pressed radially inwards, at least in the area of its clamping elements (17), in the event of any movement against the direction of insertion (14), due to the sliding of the support areas (26) on the support section (25) to increase the clamping force acting against the connection end (14).
(d) a release element (34), slidably mounted on the retaining body (6), which when sliding in the direction of insertion (14) from a rest position into an effective position, brings the clamping elements (17) into a release position with the clamping sections (21) lifted from the outer periphery (13) of the inserted connection end (14) or acting on the connection end (14) with reduced force, so that the connection end (14) can be withdrawn from the connection port (4),
characterized by the folowing features:
(e) the sprung clamping elements (17) of the collet (16) extend from the support ring (18) in the direction of insertion, angled or bent to form a claw-like shape, into the inside of the connection port (4), with each having sections running first radially outwards at an angle thereby forming the respective support area (26) and then, after the angle or bend, clamping sections (21) projecting at an angle radially inwards, and
(f) the support ring (18) of the collet (16) is assigned to the insertion side (7) of the connection port (4) and has, on that side opposite the clamping elements (17), one or more movement stops (49) limiting movement of the collet (16) in the direction of insertion (14), and engaging from behind with a counterstop (15) firmly connected so as to be axially immovable to the retaining body (6), on the side opposite the direction of insertion (20).

2. Connecting device according to claim 1, characterized in that the collet (16, 16') represents an annular object under radial prestress, located essentially coaxially in the connection port (4).

3. Connecting device according to claims 1 or 2, characterized in that the support ring (18) has a separation point (23) at one point on its periphery, so that the collet (16) is capable of sprung expansion and/or contraction at one point on its periphery.

4. Connecting device according to any of claims 1 to 3 characterized in that, for actuation of the release element (34), the latter has a handling section (35) located outside the connection port (4), and next to this a coaxial actuating section (36), in particular sleeve-shaped, which protrudes into the connection port (4), with the actuating section (36) at the same time projecting through the support ring (18) into the collet (16) with its inner end zone (38) lying opposite the inside of the clamping section (21), in order to bring the latter into the release position when the release element (34) is slid in the direction of insertion (14).

5. Connecting device according to claims 3 or 4 characterized in that, at one point on its periphery, the release element (34) is an interrupted and in particular slotted sliding collar.

6. Connecting device according to any of claims 1 to 5, characterized in that a guide (40) is provided between the release element (34) and the retaining body (6) for sliding guidance of the release element (34).

7. Connecting device according to any of claims 1 to 6, characterized in that the support section (25) is provided on a separately formed component (30') opposite the retaining body (6) and inserted in the connection port (4) for example in the frame of a spring or catch connection.

8. Connecting device according to any of claims 1 to 7, characterized in that the support section (25) is mounted rotatably on the retaining body (6) in the circumferential direction of the connection port (4) and is located for example on a bearing ring (30) rotatably mounted on the retaining body, coaxial to the connection port (4).

9. Connecting device according to any of claims 1 to 8, characterized in that a permanently fixed step (55) of the connection port (4) lies with clearance opposite the clamping elements (17) of the collet (16) in the direction of insertion, while in the area between the outside (51) of the clamping section (21) and this step (55) there is a support element (52) in particular in the form of a support ring, axially movable, which can be pressed against the outside (51) of the clamping section (21) under pressure loading of the connection port (4).

10. Connecting device according to claim 9, characterized in that in the connection port (4) is located a seal ring (54), coaxially surrounding the inserted connection end (14) and axially positioned between the free end areas of the clamping elements (17) and a step (55) of the connection port (4).

11. Connecting device according to claim 10, characterized in that the support element is located between the clamping elements (17) and the seal ring (54) and can serve as contact body for the seal ring (54).

12. Connecting device according to claim 10, characterized in that the support element (52) is designed integrally with the seal ring (54) and is preferably formed by the latter, such that the support function and the sealing function are exercised by a single support and sealing element (59).

13. Connecting device according to claim 12, characterized in that the support and sealing element (59) has an annular outer retaining section (60), by which it can be moved to and fro, guided in the axial direction (19) on the inner periphery of the connection port (4), with radially inwards a sealing lip (61) integrally formed on the retaining section (60), which seals as it surrounds an inserted connection end (14).

## Revendications

1. Dispositif de liaison, pour assurer la liaison d'éléments de construction (1) se présentant sous forme de tuyauteries, convenant pour guider un flux en écoulement, tel que des tuyaux à fluide sous pression ou des conduites à fluide sous pression, à relier entre eux ou à d'autres éléments de construction, contenant les parties suivantes :
(a) un corps de maintien (6) présentant au moins une ouverture de raccordement (4) destinée à recevoir une extrémité de raccordement (14) d'un élément de construction en forme de tuyauterie à raccorder, pouvant être enfiché de façon démontable,
(b) une pince de serrage (16), déplaçable axialement disposée au moins partiellement dans l'ouverture de raccordement (14), présentant un anneau support (18) et plusieurs éléments de serrage (17) qui, disposés de façon répartie le long de la périphérie extérieure de la zone de l'extrémité de raccordement (14), et précontraints élastiquement contre celle-ci, dans une position active, prennent une position de serrage, dans laquelle des tronçons de serrage (21), prévus sur elle, sollicitent et maintiennent l'extrémité de raccordement (14) par sa surface périphérique extérieure (13), avec une force de serrage agissant radialement vers l'intérieur.
(c) des zones d'appui (26) prévues sur les éléments de serrage (17), associées à une partie d'appui (25) située sur le corps de maintien (6), où tant la partie d'appui (25) qu'également les zones d'appui (26) associées, sur les faces tournées les unes vers les autres, présentent chacune une face oblique (29, 29') s'étendant dans la direction de l'enfichage et en même simultanément radialement vers l'extérieur, disposées à l'intérieur de l'ouverture de raccordement (14), de sorte que la pince de serrage (16), au moins dans la zone de ses éléments de serrage (17), est pressée radialement vers l'intérieur, lors d'un déplacement s'effectuant dans le sens inverse de la direction d'enfichage (14), par suite du glissement des zones d'appui (26) sur la partie d'appui (25), en vue d'augmenter la force de serrage agissant contre l'extrémité de raccordement (14),
(d) un élément de désolidarisatione (34), disposé déplaçable sur le corps de maintien (6), qui, lorsque s'effectue un déplacement dans la direction d'enfichage (14), depuis une position de repos vers une position active, déplace les éléments de serrage (17) en une position de libération, avec les tronçons de serrage (21) soulevés de la périphérie extérieure (13) de l'élément de raccordement enfiché (14) ou bien déplace l'élément de raccordement (14) avec une force moindre, de sorte que l'extrémité de raccordement (14) peut être enlevée de l'ouverture de raccordement (4),
caractérisé par les caractéristiques suivantes :
(e) les éléments de serrage élastique (17) de la pince de serrage (16) s'étendent, en partant de la bague support (18), avec une allure coudée ou repliée, en forme de griffe, dans la direction d'enfichage (14), à l'intérieur de l'ouverture de raccordement (4), où ils présentent chacun d'abord des tronçons de serrage (21), s'étendant obliquement radialement vers l'extérieur et des tronçons (32) formant en même temps la zone d'appui (26) spécifique et, s'y raccordant, pénétrant ensuite obliquement radialement vers l'intérieur par l'intermédiaire du coude ou du pli, et
(f) l'anneau support (18) de la pince de serrage (16) est associé à la face d'enfichage (7) de l'ouverture de raccordement (4) et présente, sur le côté opposé aux éléments de serrage (17), au moins une butée de déplacement (49) délimitant le déplacement de la pince de serrage (16) dans la direction de l'enfichage 14, qui saisit par l'arrière une contrebutée (15) reliée rigidement, de façon immobile axialement, au corps de maintien (6), sur le côté tourné à l'opposé de la direction d'enfichage (20).

2. Dispositif de liaison selon la revendication 1, caractérisé en ce que la pince de serrage (16, 16') constitue une structure annulaire disposée, sous une précontrainte radiale, sensiblement coaxialement dans l'ouverture de raccordement (4).

3. Dispositif de liaison selon la revendication 1 ou 2, caractérisé en ce que la bague support (18) présente, sur un endroit de sa périphérie, un point de séparation (23), de sorte que la pince de serrage (16) est ouverte en un endroit de sa périphérie en permettant un élargissement et/ou un rétrécissement élastique.

4. Dispositif de liaison selon l'une des revendications 1 à 3, caractérisé en ce que l'élément de désolidarisation (34) comporte, en vue de son actionnement, une partie de maniement (35) disposée à l'extérieur de l'ouverture de raccordement (4) et, s'y raccordant, une partie d'actionnement (36) pénétrant dans l'ouverture de raccordement, en particulier en forme de douille, la partie d'actionnement (36) pénétrant en même temps à travers la bague support (18) pour aller dans la pince de serrage (16) et se situant, par sa zone d'extrémité intérieure (38), en face de la face intérieure des sections de serrage (21), afin de placer cette dernière en position de libération lorsque le déplacement de l'élément de désolidarisation (34) s'effectue dans la direction d'enfichage (14).

5. Dispositif de liaison selon la revendication 3 ou 4, caractérisé en ce que l'élément de désolidarisation (34) est une douille coulissante, interrompue en un endroit de sa périphérie et en particulier fendue.

6. Dispositif de liaison selon l'une des revendications 1 à 5, caractérisé en ce qu'entre l'élément de désolidarisation (34) et le corps de maintien (6) est prévu un dispositif de guidage (40) pour le guidage coulissant de l'élément de désolidarisation (34).

7. Dispositif de liaison selon l'une des revendications 1 à 6, caractérisé en ce que la partie d'appui (25) est prévue sur un élément de construction (30'), réalisé séparément du corps de maintien (6) et inséré dans l'ouverture de raccordement (4), par exemple dans le cadre d'une liaison à encliquetage ou à cran.

8. Dispositif de liaison selon l'une des revendications 1 à 7, caractérisé en ce que la partie d'appui (25) est disposée dans la direction périphérique de l'ouverture de raccordement (4) de façon à pouvoir tourner sur le corps de maintien (6) et se trouve par exemple sur une bague de palier (30) montée à rotation sur le corps de maintien et disposée coaxialement par rapport à l'ouverture de raccordement (4).

9. Dispositif de liaison selon l'une des revendications 1 à 8, caractérisé en ce qu'en face des éléments de serrage (17) de la pince de serrage (16), dans la direction d'enfichage (20), à distance de ceux-ci, se trouve un étagement (55), en position fixe sur le corps de maintien (6), de l'ouverture de raccordement (4) et que, dans la zone située entre la face extérieure (51) des sections de serrage (21) et cet étagement (55), se trouve un élément d'appui (52) réalisé en particulier sous forme de bague d'appui, susceptible d'être déplaçable axialement en cas d'un sollicitation de pression de l'ouverture de raccordement (4), vers la face extérieure (51) des sections de serrage (21).

10. Dispositif de liaison selon la revendication 9, caractérisé en ce que, dans l'ouverture de raccordement (4), est disposée une bague d'étanchéité (54), entourant coaxialement l'extrémité de raccordement (14) enfichée et se trouvant axialement entre les zones d'extrémité libres des éléments de serrage (17) et un étagement (55) de l'ouverture de raccordement (4).

11. Dispositif de liaison selon la revendication 10, caractérisé en ce que l'élément d'appui se trouve entre les éléments de serrage (17) et la bague d'étanchéité (54) et peut servir de corps d'appui pour la bague d'étanchéité (54).

12. Dispositif de liaison selon la revendication 10, caractérisé en ce que l'élément d'appui (52) est réalisé d'un seul tenant avec la bague d'étanchéité (54) et, de préférence, formé par celle-ci de telle façon que la fonction d'appui et la fonction d'étanchéité soient exercées par un élément d'appui et d'étanchéité (59) unique.

13. Dispositif de liaison selon la revendication 12, caractérisé en ce que l'élément d'appui et d'étanchéité (59) comporte une partie de maintien (60) extérieure annulaire, à l'aide de laquelle il est déplaçable, dans un sens et dans l'autre, de façon guidée en direction axiale, sur la périphérie intérieure de l'ouverture de raccordement (4) et présente une lèvre d'étanchéité (61) formée d'un seul tenant radialement intérieurement sur la partie de maintien (60), qui entoure de façon étanche une extrémité de raccordement (14) ayant été enfichée.
